Europäisches Patentamt

European Patent Office

Office européen des brevets

(11) Publication number: **0 012 626**
**B1**

(19)

(12) **EUROPEAN PATENT SPECIFICATION**

(45) Date of publication of patent specification: **04.04.84**

(21) Application number: **79302927.3**

(22) Date of filing: **17.12.79**

(51) Int. Cl.³: **F 42 B 3/04, B 60 R 21/08, C 06 D 5/06**

(54) Method of and apparatus for gas generation.

(30) Priority: **18.12.78 US 970687**
**29.10.79 US 88992**

(43) Date of publication of application:
**25.06.80 Bulletin 80/13**

(45) Publication of the grant of the patent:
**04.04.84 Bulletin 84/14**

(84) Designated Contracting States:
**DE FR GB IT SE**

(56) References cited:
**DE - A - 2 364 534**
**DE - A - 2 541 724**
**FR - A - 2 186 450**
**FR - A - 2 346 632**
**US - A - 3 741 585**
**US - A - 3 785 674**
**US - A - 3 912 458**
**US - A - 3 947 300**
**US - A - 3 985 076**

(73) Proprietor: **THIOKOL CORPORATION**
**P.O. Box 1000**
**Newtown Pennsylvania 18940 (US)**

(72) Inventor: **Adams, Gary V.**
**Rt. 2 Box 323**
**Brigham City Utah 84302 (US)**
Inventor: **Schneiter, Fred E.**
**2868 N. 150 West**
**North Ogden Utah 84404 (US)**

(74) Representative: **Warren, Francis Charles et al,**
**Baron & Warren 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Method of and apparatus for gas generation

Background of the invention

This invention relates to a gas generator that utilizes the combustion of a solid gas generant composition for the rapid generation of an extremely clean gas in which most of the combustion particle residue and noxious and offensive gases have been removed. The generator is particularly useful for rapidly filling vehicle inflatable cushion restraint systems for the protection of the occupants from severe impact and possible injury during a collision.

Description of the prior art

Gas generators that utilize combustible solid gas generant compositions are known in the prior art. Common features of such generators that are used for the inflation of cushion restraint systems are the inclusion in a housing of a gas generant composition containing a pelletized alkali metal azide and means to filter and to cool the gas positioned between the composition and gas discharge orifices, as defined by the housing. Such compositions are considered advantageous for use in such applications because the product of combustion is mainly nitrogen, an inert gas, and the speed of reaction or burning thereof, upon ignition, may be selected to be such as to effect the generation of gas at a very rapid rate but without detonation. Such constituents that burn rapidly, however, usually burn with a temperature of about 1000°C to 1200°C and develop a pressure in the housing in excess of 138 bar (2000 psia). Further, the gas that is generated contains combustion residue including molten particles of metal and/or reactant oxides and also noxious and offensive gases. The high pressure that builds up in the housing tends to produce an explosive discharge of residue from the housing.

Accordingly, among the problems associated with such prior art gas generators has been the containment of the high pressure reaction within a housing of acceptable weight and bulk, and adequate filtering and cooling of the generated gas. Various chemical and mechanical cooling means that have been provided have been found to be either unreliable after extended periods, unacceptably bulky, and/or incapable of reducing the generated gas temperature to a desirably low level. The filtering means that have been provided have also been incapable of reducing the combustion residue entrained in the gas to a desirably low level. In each case the result is discomfort to the vehicle occupants who have been spared severe impact during a collision.

A proposal made in the prior art for reducing the temperature of the generated gas, as disclosed in U.S. Patent 3,985,076, granted October 12, 1976, is to promote both the cooling and speed of the reaction by a mechanical arrangement of a pelletized gas generant composition, ignition means therefor, and means for filtering and the cooling, thereby allowing the use of a cooler burning gas generant. that is to say, the gas generant composition is disposed to surround the ignition means so that a greater proportion of the gas generant material is directly exposed to the hot gases and flame therefrom. Cooling and the speed of reaction are enchanced by the fact that the gases generated expand rapidly in all directions rather than linearly, as in a cylindrical arrangement. While an improvement in these respects, there still exists a need for further improvements in respect of providing a gas that is generated at even lower temperatures and lower pressures, also, and with less entrained combustible residue and noxious and offensive gases. Moreover U.S. Patent 3,785,674, granted January 15, 1974, discloses a gas generator having three chambers arranged in tandem. There is a combustion chamber, a secondary reaction chamber and a cooling and vaporizing chamber. The secondary reaction chamber may contain silicon oxide in the form of silica gel, sand or crushed glass, which reacts with a combustion product $Na_2O$ to produce a sticky surface on the silica gel pellets that is said to aid in removing non-reactive particles by trapping them in the sticky surface layers.

Gas generating compositions have been proposed that comprise mixtures of metal azides, oxidant metal compounds and silicon dioxide. The stated purpose of the silicon dioxide is to react with and thereby transform the toxic solid combustion residue to a non-toxic or physiologically harmless residue, specifically a glass-like alkali silicate. Known U.S. patents that disclose such compositions are 3,883,373, granted May 13, 1975, 3,912,561, granted October 14, 1975, 3,947,300, granted March 30, 1976, and 4,021,275, granted May 3, 1977. Such compositions leave something to be desired because of difficulty in uniformly mixing silicon dioxide with the metal azide and oxidant compound as required to react the silicon dioxide with the residues and for obtaining satisfactory combustibility.

Mechanical filtering systems are also known that include filter packs in the gas-flow path, such filter packs including multiple layers of screen of various mesh sizes, some made of metal and including one or more layers of high temperature glass fibers in which the filtering action is determined solely by the mesh sizes of the various filter layers. U.S. patents disclosing such filter packs are 4,017,100, granted April 12, 1977, and 4,012,211, granted March 15, 1977.

There is also described in the prior art gas generant compositions that are said to burn with the production of only the desired gaseous product and a solid product in the form of a sinter or clinker that does not escape from the generator housing. Such compositions are described in U.S. Patent Nos. 3,895,098, granted July 15, 1975, 3,931,040, granted January 6, 1976, 3,996,079 granted December 7,1976 and 4,062,708, granted December 13, 1977. They are described as comprising mixtures of metal oxides such as nickel oxide or iron azide, and an alkali metal azide. A primary particle size for the reactant oxide in the range of a small fraction of a micron to a few microns is indicated as essential for effecting a burning rate fast enough for inflating an inflatable occupant restraint system.

Efforts to make an operative gas generator utilizing a gas generant composition as described in the aforementioned patents have been unsuccessful. Among the problems encountered were difficulty in compacting the mixture to form a stable pellet, and difficulty in igniting the mixture.

Pelletizing the gas generating composition has been found to be essential for the composition to remain reliable over extended periods, and for providing a uniform surface area for uniform burning upon ignition of the composition. Otherwise the burning rate is not predictable. Without pelletizing there is a tendency for packing and separation of the finely divided particles after the gas generator has been subjected to vibration over an extended period of time, as occurs during ordinary use, particularly when applied to a vehicle.

In our copending European application No. 79302929.9 (EP—A—0012628) there is described a gas generant composition consisting of a mixture of 60—80% of sodium azide (NaN₃) 2—26% of iron oxide (Fe₂O₃), 0—6% of sulfur (S₂) and 2—26% of molybdenum disulfide (MoS₂), a preferred mixture comprising 66% sodium azide, 30% iron oxide, 2% sulfur and 2% molybdenum disulfide. It has been found that this mixture is readily compacted to form a stable pellet and provides a burning rate at a combustion temperature of 1025°C, that is fast enough to effect inflation of a vehicle cushion restraint system within 45 to 60 milliseconds. Important features of the combustible composition are its substantially lower operative burning temperature at a high burning rate and at a substantially lower pressure, providing a gas, as generated that is cooler by at least 200°C than that available from prior art generators. The sodium azide produces a high percentage of nitrogen generating efficiency. The molybdenum disulfide and sulfur provide excellent combustion stability. The iron oxide is reduced during combustion, and the iron Fe, that is thereby produced, forms a shower of molten particulate. This particulate tends to be blown out of the combustion chamber, being carried along with the generated gas. There remains, additionally, combustible residue in the form of offensive gases that also tend to be carried out of the generator with the generated gas.

Thus, there still exists a need for further improvements in solid fuel gas generators, particularly in respect of the filter structure and its cooperative relation with the gas generant composition and the combustion chamber, at the high temperature environment therein, for enabling the trapping within the combustion chamber of larger amounts of the particulate matter and for rendering inocuous the noxious and offensive gases that are produced, thereby to make the gas generator more attractive to both the user and the manufacturer, to the user from the standpoint of comfort as well as safety, and to the manufacturer from the standpoint of simplifying and reducing the weight and size of the structure, and hence, reducing the manufacturing cost, and further, enhancing reliability.

Summary of the invention

Among the objects of the invention is to provide a method of and apparatus for producing an extremely clean odorless inert gas.

Another object of the invention is to provide a solid fuel gas generator and use thereof for filtering combustion particulate residues and gases.

Another object of the invention is to provide a solid fuel gas generator having an improved filter structure.

A preferred object of the invention is to provide an improved solid fuel gas generator that produces a gas having a pH of 7 to 8 without the use of a chemical neutralizer.

Still another preferred object of the invention is to provide an improved solid fuel gas generator in which the combustion chamber operating pressure is under 103 bar (1500 psi) thereby allowing the use of light weight components for the housing and combustion chamber structure.

Another object of the invention is to provide such a generator that functions with good ballistic performance.

In accomplishing the foregoing objects and other objectives of the invention, there is provided a gas generator that is generally similar in its mechanical arrangement to the generator disclosed in the aforementioned US patent 3,985,076. The generator of the present invention, however, features improvements in respect of simplifying the generator, in the construction and arrangement of the primary or combustion chamber filter and optionally in the ignition and gas generant compositions employed, and of the secondary or fine particulate final chamber filter. In an operative embodiment of the invention, the improved primary and secondary filters provide a capability of filtering out 99.6% of the particulate solids from the generator effluent, such filtering occurring during a 45 millisecond function time with an operating pressure in the combustion chamber in the 103—138 bar (1500 psi—2000 psi) range.

Specifically, in accordance with one aspect of the invention, the primary or combustion chamber filter includes one or more layers of fibreglass woven fabric or cloth that is selected for its compatibility with the combustion chamber temperature during burning of the gas generant composition to the end that the fabric, at that temperature, provides a tacky surface that facilitates the entrapment of particulate solid residues but does not melt or erode away under the effects of the high temperature environment. The effectiveness of the filter is enhanced by its immediate proximity to the gas generant composition, in close surrounding relation thereto. Thus the filter is in a position to be effective while the acceleration and velocity of the generated gases are still at a relatively low level. It is believed that as a result of the formation of the tacky surface, the porosity of the woven fabric is reduced for a short interval of one or two milliseconds of the function time at an early stage of the function time. During this short interval solid particulate combustion residue is prevented from being blown out of the combustion chamber thus allowing the solid particulate residue to condense and become trapped in the filter.

In one specific form of the invention the combustion chamber filter includes one to three layers of coarse screen immediately adjacent the combustion chamber wall. Inboard of the coarse screen are one or more layers of the fibreglass woven fabric or cloth. Multiple layers of fine mesh screen, preferably of carbon steel, are provided inboard of the multiple layers of fibreglass cloth for providing a relatively large cool surface for the condensation of particulate combustion residue prior to encountering the multiple layers of fiberglass fabric. An added benefit of the use of the fiberglass woven fabric in the primary filter is that under the high temperature environment, the glass reacts with caustic sodium oxide, $Na_2O$, an effluent of the combustion process, to form innocuous sodium silicate.

The secondary or fine particulate final filter is located outside the combustion chamber, in a diffuser space of the gas generator. This filter is comprised of multiple wraps of wire mesh which serves to cool the gas and also to provide a surface for condensation of solid particles. Surrounding the wire mesh are one or more wraps of an aluminum silicate blanket. This blanket serves as a particle trap for solid particulate combustion residue that still is entrained in the gas stream, and also reacts with particles of sodium oxide which come into intimate contact with the secondary filter to form sodium silicate.

Description of the drawings

Figure 1 of the drawing is a sectional view of a gas generator having particular utility in a vehicle cushion restraint system for protecting the driver of the vehicle;

Figure 2 is a sectional view of a gas generator having particular utility in a vehicle cushion restraint system for protecting the passengers in the vehicle.

Description of the preferred embodiments

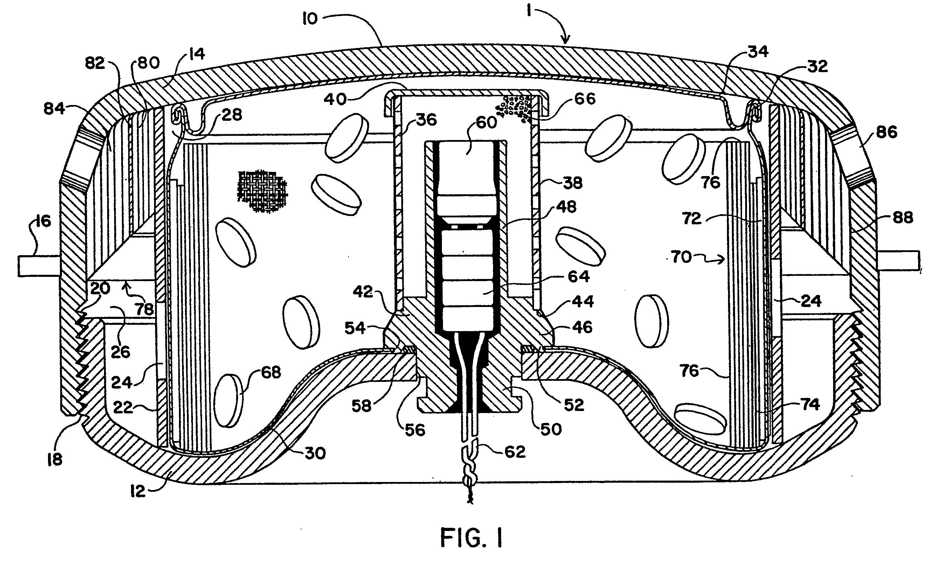

As shown in Figure 1 of the drawings, the gas generator 1 includes a diffuser housing 10 comprising a lower concave half shell or base 12 and an upper convex half shell or cover 14 having an annular mounting flange 16 suitably welded thereto for mounting the generator 1, typically, centrally of the steering wheel of a vehicle. The half shells 12 and 14 have internal screw threads 18 and 20 for engagement of and locking of the half shells together. Enclosed within the half shells 12 and 14 are a cylindrical member 22 having a plurality of circumferentially spaced ports or orifices 24. The opposite ends of member 22 engage the respective concave and convex surfaces of the half shells in sealing relation to form an outer annular chamber 26 and an inner cylindrical chamber 28. A rupturable hermetically sealed cylindrical cartridge or container 30 is positioned in chamber 28, being disposed coaxially therewith and held firmly in position. The lower and upper surfaces of cartridge 30 conform to the lower and upper inner surfaces of half shells 12 and 14, respectively.

The cylindrical side wall of cartridge 30 engages the inner surface of cylindrical member 22, completely around its periphery. The upper end of cartridge 30 comprises an end disc 34 that is sealed by a sealant 32 to the cylindrical side wall with a double-crimp seal and suitable sealant, typically as provided in metal containers used for preserving food and beverages.

Positioned in cartridge 30 in coaxial relationship therewith is a perforated cylindrical initiator tube 36 having a rupturable metal foil or diaphragm 38 sealed to the outer wall thereof. A closure cap 40 is provided for the tube 36 at the upper end. Tube 36 is supported at the lower end thereof on a shoulder 44 of a generally cylindrical hollow initiator mounting adapter 42 having a flange 46, a thin upper tubular initiator barrier portion 48, and a thick lower tubular portion 50, said tubular portions 48 and 50 being concentrically arranged with respect to tube 36. A ring-like projection 52 on the lower side of flange 46 extends through and is retained by a circular opening 54 that is provided in the bottom of cartridge 30. The tubular portion 50 of adapter 40 also extends through and is retained in a circular opening 56 that is provided in the bottom of the half shell 12. Desirably, tubular portion 50 is press fit in opening 56.

A sealing O-ring 58 is provided between the flange 46 and the half shell 12.

A conventional electric squib 60 having a pair of energizing lead wires or terminals 62 is positioned in the upper portion 48 of adapter 42, with lead wires extending through ferrite beads indicated at 64. The ferrite beads are provided to render the squib 60 substantially insensitive to extraneous radio frequency energy that may pervade the environment surrounding the gas generator. Desirably, in order to render the electric squib additionally insensitive to extraneous radio frequency energy and electrostatic potentials, an arrangement as disclosed in our copending United Kingdom application 7911463, filed 2 April 1979, (now United Kingdom Patent No. 2018959B), may be utilized.

As shown in the drawing, the tubular portion 48 and the electric squib 60 are centrally located in perforated tube 36 and are surrounded therein by pyrotechnic material comprising igniter granules 66. Although various pyrotechnic materials may be employed, a preferred material is a granular mixture of 15% by weight of boron and 85% of potassium nitrate plus or minus 10% of lead azide. This mixture, as described in the above mentioned EP—A—0012628 has been found to burn with a very hot flame.

As noted, the rupturable metal foil 38 surrounds the perforated tube 36. The metal foil 38 and tube 36 are surrounded by uniformly distributed pellets 68 of a gas generant composition. Pellets 68 in turn, are surrounded by an annular primary or combustion chamber filter indicated at 70. The metal foil 38 serves the dual purpose of retaining the granular pyrotechnic material 66 in the perforated tube 36 and of insuring that the high temperature gases produced by the pyrotechnic material 66, upon firing of the squib 60, have sufficient pressure to permeate the gas generant composition 68 thoroughly for efficient and sustained ignition before they are released by rupture of the metal foil 38.

Although in the broader aspects of the present invention, the gas generant composition may be any one of a number of compositions meeting the requirements for burning rate, nontoxicity, and flame temperature, a preferred material is that described in the aforementioned EP—A—0012628. Also preferred are the azide, sulfur, molybdenum sulfide gas generant compositions described in U.S. Patent 3,741,585. Of these latter compositions, particularly preferred are compositions comprising from about 65 weight percent to about 70 weight percent alkali metal azide, up to about 4 weight percent sulfur and from about 27 weight percent and about 33 weight percent molybdenum disulfide, especially a composition comprising about 68 weight percent sodium azide, about 2 weight percent sulfur and about 30 weight percent molybdenum disulfide.

The combustion chamber filter 70 is preferably made in three parts, specifically one to three layers of coarse screen 72 adjacent to the inner or chamber wall of cartridge 30, one or more layers of filter cloth 74, specifically of fiberglass woven fabric or cloth, and multiple layers of fine mesh screen 76.

A secondary filter 78 is located outside of the inner or combustion chamber 28, in the diffuser area. Filter 78 is a screen pack comprised of three parts, specifically, multiple wraps of coarse wire mesh 80, one or more wraps of aluminum silicate blanket 82 that surround the wire mesh 80, and several wraps of fine mesh screen 84, preferably 0.149×0.149 mm (100×100 mesh), adjacent to the inner wall of the upper half shell 14 and that surround and provide structural support for the aluminum silicate blanket 82 and also cover exit ports or orifices 86 that are circumferentially disposed in the upper portion of the sidewall of the half shell 14. Orifices 86 desirably are angularly offset from the orifices 24 in the cylindrical member 22 and provide exit openings for the gas that is generated by the generator 1 upon combustion of the gas generant composition 68.

The screen pack comprising filter 78 is formed around the cylindrical member 22, a suitable seal strip 88 being placed around the outer wraps of fine mesh screen 84 for contacting the inner surface of the upper half shell 14 when the latter is brought into cooperative locking engagement with the lower half shell 12. The arrangement is such that the screen pack 78 is then brought under a suitable compressive load, with the upper edges curved inwardly, in the annular space between the ports 24 in the cylindrical member 22 and the exit ports 86 in the upper half shell 14.

By way of illustration and not limitation it is noted that in an operative embodiment of Figure 1 of the invention, the external diameter of the generator 10 is 10.998 cm. (4.330″) and its height is 6.353 cm. (2.501″), and the material of which several components are made and the dimensions thereof where relevant are as indicated below:

| Components | Materials | Dimensions |
|---|---|---|
| half shell 12 | carbon steel | |
| half shell 14 | carbon steel | |
| cartridge 30 | aluminum | |
| primary filter | | |
| coarse screen | carbon steel | 1.0×1.0 mm<br>(18×18 mesh) |
| filter cloth 74 | fiberglass, Style 1528 mfd.<br>by Hexcel Trevarno, Dublin, California | approx. 0.39×0.55 mm<br>(42×32 plain mesh) |
| fine mesh screen 74 | carbon steel | 0.42×0.42 mm<br>(40×40 mesh) |
| secondary filter | | |
| coarse screen 80 | | 0.635 cm. (.25″) thick |
| blanket 82 | A binder of content of 5% and a chemical analysis of fibers of 46% by weight, binder free and 54% of alumina ($Al_2O_3$) silica ($SiO_2$) crabfiber paper, Johns-Manville, Denver, Colo. | |
| fine mesh screen 84 | | 0.149×0.149 mm<br>(100×100 mesh) |

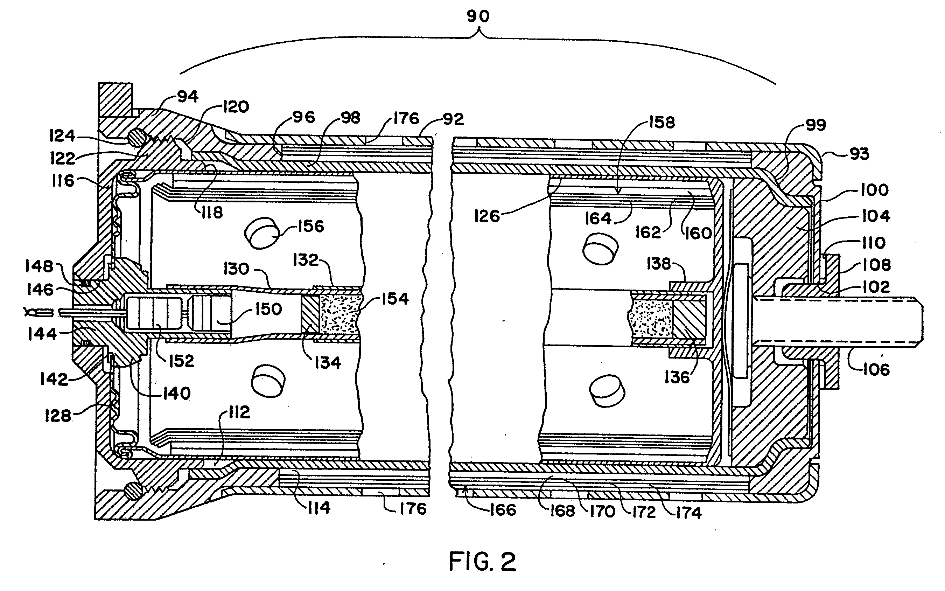

Figure 2 is a sectional view of a gas generator 90 according to the present invention that is particularly applicable for use in a vehicle cushion restraint system for protecting the passengers, being mounted in an appropriate manner in or on the dash board of the vehicle.

As shown, the generator 90, similarly to the generator 1 of Figure 1, is annular in general construction, and essentially differs in principle and operation from the generator 1 only in being elongated, typically having a length of 52.54 cm. (21″) and having the capability of a greater output of generated gas. Thus, the generator 90 includes an elongated cylindrical housing 92 preferably made of carbon steel that for most of its length has thin walls but at the left.end, as seen in Figure 2, includes a heavier diffuser flange section 94 that provides a shoulder indicated at 96. Section 94 flares outwardly to receive a second elongated thin cylindrical member 98 made of carbon steel that is concentrically positioned with respect to housing 92. The wall of the right end of cylindrical housing 92 is rolled inwardly as indicated at 93 and is provided with a stud end flange 100 having a centrally disposed opening 102 therein. The right end of cylindrical member 98 is provided with an inward S-shaped curl as indicated at 99. Cooperating with the right ends of housing 92 and cylindrical member 98 for firmly locking those ends together are a stud end cap 104, a weld screw 106, a nut 108 and a lockwasher 110. The stud end cap 104 fits within the right end of cylindrical member 98 and has a peripheral surface that matches the S-shaped curl 100 in the end of member 98. Weld screw 106 extends through stud end cap 104 and outwardly of the stud end flange 100 to engage the nut 108 which extends partially through stud end cap 104, the lockwasher 110 being provided to firmly retain the members together for long periods notwithstanding the presence of vibration. When the weld screw 106 and nut 108 are pulled together in locking relationship, the right end of cylindrical member 98 is brought into tight engagement with the inner wall of stud end flange 100.

It will be noted that the interior of the cylindrical member 98 forms a combustion chamber 112 and that the annular space 114 between the member 98 and the inner surface of housing 92 provides a diffuser space that extends to the left, however, only as far as the inner shoulder 96 on housing 92.

The left ends of the housing 92 and cylindrical member 98 are closed by a ring-shaped closure member 116 that has a first peripheral portion 118 that fits inside a flared left end 120 of cylindrical member 98, and a second peripheral externally threaded portion 122 that fits inside the flared internally threaded section 94 of housing 92, in threaded engagement therewith retaining and sealing O-ring 124 may also be provided, as shown.

An elongated rupturable hermetically sealed cylindrical cartridge 126, preferably made of aluminum, is positioned in chamber 112, being disposed coaxially therewith, completely filling the chamber and being held firmly against either radial or lengthwise movement. The left end of cartridge 126 comprises an end disc 128 that is sealed by a suitable sealant to the cylindrical sidewall with a double crimp seal.

Positioned in cartridge 126 in coaxial relationship therewith is an elongated perforated cylindrical initiator or igniter tube 130 having a rupturable metal foil or igniter barrier 132 sealed to the outer wall thereof. An igniter plug 134 is provided adjacent the left end of igniter tube 130 and a separate igniter plug 136 is provided at the right end of tube 130, adjacent the right end wall of cartridge 126. As shown, the inner right end wall cartridge 126 includes an inwardly projecting short cylindrical portion 138

6

for retaining the right end of igniter tube 130 in position. The left end of igniter tube is supported on the end of an initiator mounting member 140 that, in turn, is retained by a circular opening 142 in the cartridge 126 and includes a portion 144 that is press fit in a central opening 146 provided in ring shaped closure member 116. A O-ring 148 is provided to retain mounting member 140 in position.

A conventional electric squib 150 having suitable energizing terminals is provided in the right end portion of initiator mounting member 140, ferrite beads 152 being provided to render the squib 150 insensitive to extraneous radio frequency energy. Between the igniter plugs 134 and 136 in the igniter tube 130 is pyrotechnic material comprising igniter granules 154. Surrounding the igniter tube 130 are uniformly distributed pellets 156 of gas generant composition, which composition, in turn, is surrounded by an elongated annular primary or combustion chamber filter 158 which, generally, is similar to the filter 70 of the Figure 1 gas generator.

The primary filter 158 comprises a filter pack of three screens including one to three layers of coarse screen 160 that are adjacent the inner wall of cartridge 126, one or more layers of fiberglass woven fabric or cloth 162, and multiple layers of fine mesh screen 164, preferably 0.42x0.42 mm (40x40 mesh) carbon steel.

A secondary filter 166 which, generally, is similar to the filter 78 of Figure 1, is located in the annular chamber 114 comprising the diffuser region and comprises a coarse, 1.0 mm (18 mesh), stand-off screen 168 that surrounds the cartridge 126 in contact therewith, multiple wraps of coarse screen 170, one or more wraps of aluminum silicate blnaket 172 that surround the coarse screen 170, and several wraps of fine 0.149 mm (100 mesh) screen 174 that are provided adjacent the inner wall of housing 92. The 18 mesh standoff screen 168 is provided to allow the aluminum foil of cartridge 126 to blow out of the way.

The secondary filter 166 is arranged to cover a plurality of exit ports or orifices 176 that are provided in the cylindrical housing 92 and a plurality of exit ports or orifices (not shown) that are provided in the housing 98. Preferably, four angularly spaced rows of exit ports are provided circumferentially of each of members 92 and 98, with 12 ports in each row, the exit ports in member 98 being offset both linearly and radially from the exit ports 176 in housing 92.

Operation of the preferred embodiments

The mechanical arrangement of the gas generator component of the present invention inherently promotes speed of reaction, cooling and filtering. Accordingly, with the structures of each of Figures 1 and 2 a slower burning, and hence, cooler burning gas generant may be used. The speed of reaction is increased notwithstanding the inherent characteristic of slower burning gas generants to be hard to ignite. This is the result of several factors including the use of a composition for the igniter granules in the combustion initiator that provides a higher flame temperature than in the prior art generators, and by arranging the gas generant composition pellets in uniformly distributed annular surrounding contact with the initiator whereby the entire peripheral area of the gas generant composition is immediately and simultaneously exposed to the hot gases and high temperature flame from the initiator.

The speed of reaction in the generation of the desired gas, that desired for inflation of a vehicle cushion restraint, for example, is enhanced because the burning gases from the initiator and from the gas generant composition are made to expand rapidly in all directions, without detonating, however, thus permeating and diffusing rapidly throughout the gas generant composition. Featured, also, are the arrangement and construction of the primary or combustion chamber filter and the secondary or fine particulate final filter that have the capability of filtering out 99.6% of the solids from the gas generator effluent during a 45 millisecond function time with a low operating pressure of less than 103 bar (1500 psi). The porosity of the fiberglass woven fabric or cloth of the primary or combustion chamber filter is so low in this pressure range as to retain the products of combustion or particulate residues in the combustion chamber for a short interval, an interval of one or two milliseconds only in the 45—60 millisecond function time of the generator. This prevents most of such combustion products or particulate residues from being explosively blown out of the combustion chamber and allows them to be cooled and condensed on the carbon steel fine mesh screen that is located inboard of the fiberglass woven fabric element of the filter.

Specifically, the pyrotechnic material of the initiator, the gas generant composition and the primary filter are all contained in the hermetically sealed aluminum cartridge. This insures reliability of the generator over long periods. The aluminum cartridge is positioned in the combustion chamber of the generator. Upon initiation of combustion by the firing of the squib, the rising gas pressure ruptures the sidewall areas of the cartridge adjacent the orifices of the combustion chamber. This allows gas to flow through the primary filter and out of the combustion chamber through the several orifices. The combustion chamber filter in each of Figures 1 and 2, consists of one to three layers of a coarse screen adjacent to the wall of the chamber. This serves as a collecting area for gas to flow along the chamber wall to the chamber orifices and permits gas to flow through the primary filter and out of the combustion chamber through the several orifices. The combustion chamber filter in each of Figures 1 and 2, consists of one to three layers of a coarse screen adjacent to the wall of the chamber. This serves as a collecting area for gas to flow along the chamber wall to the chamber orifices and permits gas to flow evenly through the primary filter regardless of the proximity of a combustion chamber orifics. Inboard of the coarse screen are one or more layers of the fiberglass woven fabric. The fiberglass fabric is selected for compatibility with the temperature in the combustion chamber during burning of the selected gas generant composition thereby to provide a tacky surface for particle entrapment that does not melt or erode away under the effects of the high temperature gas. An effect accompanying the production of the tacky surface appears to be a swelling of the fibers of the fiberglass fabric that reduces the porosity of the primary filter, and hence, causes the primary filter to restrict the flow of gas and combustion residue out of the combustion chamber. This effect continues for only a short interval, as described, but long enough to allow cooling and condensation of hot and molten particulate residue within the voids of the filter. Inside of the multiple layers of the fiberglass cloth are multiple layers of fine mesh carbon steel screen. The layers of the fine mesh carbon steel provide a large relatively cool surface for condensation of combustion solids prior to encountering the multiple layers of fiberglass woven fabric. Approximately 95 percent of all solid products of combustion are trapped in the combustion chamber filter. It is noted that outside of the combustion chamber the acceleration of the gases that are generated becomes so high that trapping of the products of combustion in that region becomes exceedingly difficult.

An added benefit of the fiberglass cloth is that under the high temperature environment, the glass reacts with caustic sodium oxide, $Na_2O$, an effluent of the combustion process, to form innocuous sodium silicate.

The secondary filter in each of Figures 1 and 2, is located outside of the combustion chamber in the diffuser area of the annular chamber 26. This filter is comprised of multiple wraps of wire mesh which serves to cool the gas and provide surface for condensation of solid particles. Surrounding the wire mesh filter pack are one or more wraps of the aluminum silicate blanket. The aluminum silicate blanket serves two distinct functions. One of these functions is to react with particles of sodium oxide which come into intimate contact with the second filter to form sodium silicate.

Surrounding the aluminum silicate blanket are several wraps of fine mesh screen which provide structural support for the aluminum silicate blanket. It is noted that aluminum silicate blanket is porous, has very little strength, and tends to disintegrate under the effects of the high velocity gas stream. The filter elements, however, retain the solids entrapped. The fine mesh outer screen is used to trap these aluminum silicate filter particles and prevent them from being carried out of the exit orifices of the housing with the clean combustion gases.

The present invention is not dependent upon the specific chemical composition of the combustible gas generant, the selection of the fiberglass woven fabric or cloth for compatibility with the combustion temperature of the selected gas generant composition being the prime requirement. The use of the disclosed primary filter within the combustion chamber provided by the cartridge in a gas generator utilizing a gas generating composition as disclosed in the aforementioined copending application provides distinct advantages. These advantages are derived from the lower temperature and pressure at which combustion of that composition takes place in the combustion chamber. This makes possible a gas generator of lighter weight since the structural components are subjected to lower combustion chamber temperature and pressure, and the production of an extremely clean gas and odor free gas. In the aforementioned operative embodiment of this form of the invention, the amount of solid or particulate matter in the effluent gas was reduced from 3 to 5 grams, as obtained in the prior art generator of US Patent 2,985,076, to 250 milligrams. Moreover, the generator of the invention produced a substantially chemically neutral gas with a pH of 7 to 8 without the use of a chemical neutralizer.

Thus, there has been provided, according to the invention, an improvement in the generation of gas by a solid fuel generator that results in the generation of extremely clean odorless gas having a substantially reduced temperature. Such gas generation is accomplished by a generator of smaller size, having lighter weight components, that operates at a pressure under 103 bar (1500 psi). The improved generator includes a gas generant composition characterized by sustained combustion at a lower temperature of about 1025°C but nevertheless at a burning rate high enough to inflate a vehicle cushion restraint system within 45 milliseconds. The pyrotechnic material for initiating combustion provides a desirably strong burning initiative thereby rapidly to effect sustained vigorous combustion of the gas generant composition. A combustion chamber cooling filter for maximum solids retention with low pressure drop, that is, the primary filter, includes a fiber-glass woven fabric or cloth that provides a restriction to retard for a short interval the flow of combustion products out of the combustion chamber, and reacts with the caustic soda effluent resulting from the combustion process, to provide a tacky surface for trapping solid particulate products and for converting the caustic soda to form inocuous sodium silicate. The action of the filter is facilitated because of its location in the combustion chamber where it is operative to condense and trap solid particulate residue and to react with the caustic soda effluent during the short interval that the generated gases are still undergoing relatively low rates of acceleration and velocity. The invention further features a secondary filter that serves to cool the gas, provides a surface for further condensation of particles, and additionally, reacts with caustic soda particles to form sodium silicate. The secondary filter constitutes a final cooling filter for fine particle entrapment with low pressure drop.

It will be understood that where the alkali metal azide forming the gas generant composition is a metal other than sodium, and is for example, potassium or lithium, the reaction of the glass of the fiberglass or cloth of the primary filter and the reaction of the aluminum silicate blanket of the secondary filter with the metallic oxide effluent of the combustion process would, in each case, to be form an innocuous alkali metal silicate, that is, potassium silicate or lithium silicate.

## Claims

1. A gas generator (1, 90) including a combustion chamber (28, 112) having gas discharge orifice means (24) and pelletized combustible gas generating means (68, 156) disposed in said combustion chamber and operable upon ignition by an igniter (60, 150) to produce gas and combustion product residues, and primary filter means (70, 158) to react and trap said combustion product residues, characterized in that said primary filter means (70, 158) are disposed within said combustion chamber adjacent the orifice means and are operable both to cool said gas and to trap said combustion product residues within said combustion chamber, said primary filter means including a fiberglass woven fabric (74, 162) and a cooling wire mesh (76, 164) proximate to said gas generating means, in close surrounding relation thereto, said fiberglass woven fabric (74, 162) being selected for its compatibility with the combustion process and having a surface which at the temperature and environment of the combustion process, begins to melt and become tacky at an early stage of the combustion process whereby the porosity of said filter means is reduced while the acceleration and velocity of the generated gases are at a relatively low level, thereby preventing combustion product residues from being blown out of the combustion chamber (28, 112) through said orifice means (24) and allowing such residues to cool and condense on (a) said cooling wire mesh (76, 164) of said filter means (70, 158), said cooling wire mesh (76, 164) being located between said gas generating means (68, 156) and said fiberglass woven fabric (74, 162).

2. A gas generator as claimed in claim 1, wherein said substance of the primary filter means (70, 158) comprises a plurality of layers of said fiberglass woven fabric (74, 162).

3. A gas generator as claimed in claim 2, wherein the primary filter means (70, 158) includes a plurality of filter portions of which the fiberglass woven fabric layers (74, 162) comprise an interior portion.

4. A gas generator as claimed in claim 3, wherein the portion of the primary filter means (70, 158) adjacent to the gas discharge orifice means (24) comprises at least one layer (72, 160) of a coarse screen and the cooling wire mesh of the primary filter means adjacent the gas generating means comprises a plurality of layers (76, 164) of fine mesh screen.

5. A gas generator as claimed in claim 4, wherein the composition of the gas generating means (68, 156) is such that one of the products of combustion is an alkali metal oxide, said fiberglass woven fabric reacting chemically with said alkali metal oxide to produce an alkali metal silicate and to cause the fibers of said fiberglass woven fabric to swell and to be effective, as the pressure in the combustion chamber rises to a predetermined level, to restrict the flow of gas through the filter means thereby allowing molten products of combustion to cool and condense on said fine mesh screen (76, 164).

6. A gas generator as claimed in claim 5, wherein one of the products of combustion is caustic soda and the product of the reaction of said caustic soda with the fiberglass woven fabric (74, 162) is sodium silicate.

7. A gas generator, as claimed in any one of the preceding claims, wherein the generating means (68, 156) and the primary filter means (70, 158) are contained in a rupturable hermetically sealed cartridge (30, 126), said cartridge and combustion chamber (28, 112) both being cylindrical in shape and said cartridge being substantially concentrically arranged with respect to and substantially filling said combustion chamber.

8. A gas generator as claimed in any one of the preceding claims, including housing means (10, 92) having wall means defining an annular space (26, 114) external of the combustion chamber, said wall means having second gas discharge orifice means (86, 176) and secondary filter means (78, 166) disposed in said annular space between said first and second orifice means further to cool the gas and trap combustion products.

9. A gas generator as claimed in claim 8, wherein the secondary filter means (78, 166) includes a plurality of filter portions (80—84, 168—174), an intermediate portion (82, 172) of said second filter means comprising aluminium silicate which reacts chemically with caustic soda to form sodium silicate.

10. A gas generator as claimed in claim 9, wherein the secondary filter means (166) includes a standoff screen and a coarse screen (168) between the first gas discharge orifice means and a blanket (172) of the aluminium silicate, and a fine screen (174) between said blanket of aluminium silicate and a second gas discharge orifice means (176).

11. A gas generator as claimed in claim 7 or claim 8, 9 or 10 as appendant to claim 7, wherein the combustible gas generating means (68, 156) includes ignition means (60, 150), said ignition means being disposed along the cylindrical axis of the cartridge (30, 126) and combustion chamber (28, 112), and wherein the gas generating means includes a plurality of pellets substantially uniformly distributed in the cartridge in surrounding relation with the ignition means.

12. A gas generator as claimed in claim 11, wherein the gas generating pellets (68, 156) comprise a compacted mixture of 66% sodium azide, 30% ferrous oxide, 2% sulfur and 2% molybdenum disulfide.

13. A gas generator as claimed in claim 11, wherein the gas generating pellets (68, 156) comprise a compacted mixture of about 65 weight percent to about 70 weight percent alkali metal azide, up to about 4 weight percent sulfur and from about 27 weight percent to about 33 weight percent molybdenum disulfide, for example, about 68 weight percent sodium azide, about 2 weight percent sulfur and about 30 weight percent molybdenum disulfide.

14. A gas generator as claimed in any one of the preceding claims 1 to 10, wherein the combustible gas generating means (68, 156) includes a plurality of pellets substantially uniformly distributed throughout the combustion chamber and comprising a compacted mixture of 66% sodium azide, 30% ferrous oxide, 2% sulfur and 2% molybdenum disulfide.

15. A gas generator as claimed in any one of the preceding claims 1 to 10, wherein the combustible gas generating means includes a plurality of pellets (68, 156) substantially uniformly distributed throughout the combustion chamber and comprising a compacted mixture of about 65 weight percent to about 70 weight percent alkali metal azide, up to about 4 weight percent sulfur, and from about 27 weight percent to about 33 weight percent molybdenum disulfide, for example, about 68 weight percent sodium azide, about 2 weight percent sulfur and about 30 weight percent molybdenum disulfide.

16. A gas generator as claimed in any one of the preceding claims, wherein the gas generating means (68, 156) includes ignition means comprising a granular mixture (66, 154) of 15% by weight of boron and 85% of potassium nitrate plus or minus 10% for each component with the further addition of 3—10% of lead azide, said gas generating means surrounding said ignition means.

17. A gas generator as claimed in claim 16, wherein the ignition means includes an electric squib (60, 150), a perforated tube (36, 130) and a rupturable metal foil (38, 132) sealed to the outer wall of said tube, said electric squib being disposed within said tube, adjacent said granular mixture.

18. A method of filtering nitrogen gas that is generated by a combustion process, involving the burning of a pelletized gas generant composition (68, 156), in a combustion chamber (28, 112) having gas discharge orifices (24), and wherein the combustion process produces as other combustion products free iron particulate residue and an alkali metal oxide, and further involving filter means (70, 158) to react and trap such other combustion products characterized by the steps of providing for said filter means (70, 158) a fiberglass woven fabric (74, 162) that is selected for its compatibility with the temperature and environment of the combustion chamber and for its characteristic property, at that temperature, of reacting with said alkali metal oxide in the combustion product residues to form an innocuous alkali metal silicate and of becoming tacky and less porous during an early stage of the combustion process function time to retard the flow therethrough of said combustion product residues, providing a plurality of layers (76, 164) of a fine mesh cooling screen for cooling and condensing iron particulate residue in surrounding relation to said gas generant composition, in contact therewith, and surrounding said cooling screen, in contact therewith, by at least one layer (74, 162) of said woven fabric.

19. A method as claimed in claim 18, wherein a plurality of layers of a coarse screen (72, 160) are disposed in surrounding relation with the fiberglass woven fabric, in contact therewith and immediately adjacent the internal wall of the combustion chamber.

20. A method as claimed in claim 18 or 19, wherein the alkali metal oxide in the combustion products is caustic soda, and wherein the fiberglass woven fabric reacts with the caustic soda to form innocuous sodium silicate.

21. A method as claimed in claim 18, 19 or 20, wherein filtering means (78, 166) is disposed in surrounding relation with the external wall of the combustion chamber, in contact therewith, said filtering means including a blanket (82, 172) of aluminium silicate to react with caustic soda in the combustion products to form innocuous sodium silicate.

**Patentansprüche**

1. Gasgenerator (1, 90), der eine Verbrennungskammer (28, 112) mit Gasauslaßöffnungen (24), pelletierte brennbare Gaserzeugungsmittel (68, 156), die in der Verbrennungskammer angeordnet und durch Zündung mittels eines Zünders (60, 150) betätigbar sind, um Gas und Verbrennungsrückstände zu erzeugen, und erste Filtermittel (70, 158) einschließt, um auf die Verbrennungsrückstände zu reagieren und diese zu fangen, dadurch gekennzeichnet, daß die ersten Filtermittel (70, 158) innerhalb der Verbrennungskammer angrenzend an die Auslaßöffnungen angeordnet und sowohl zum Kühlen des Gases als auch zum Fangen der Verbrennungsrückstände in der Verbrennungskammer in der Lage sind, daß die ersten Filtermittel in naher umgebender Beziehung zu den Gaserzeugungsmittteln ein Glasfasergewebe (74, 162) und ein zu den Gaserzeugungsmitteln am nächsten liegendes Kühldrahtnetz (76, 164) einschließen, daß das Glasfasergewebe (74, 162) wegen seiner Verträglichkeit mit dem Verbrennungsprozeß ausgewählt ist und eine Oberfläche aufweist, die bei der Temperatur und Umgebung des Verbrennungsprozesses zu schmelzen beginnt und bei einer frühen Stufe des Prozesses kleibrig wird, wodurch die Porosität der Filtermittel reduziert wird, während die Beschleunigung und die Geschwindigkeit der erzeugten Gase einen relativ niedrigen Wert aufweisen, um dadurch die Verbrennungsrückstände am Ausgeblasenwerden aus der Verbrennungskammer (28, 112) durch die Auslaßöffnungen (24) zu hindern und um den Rückständen zu erlauben, sich am (a) Kühldrahtnetz (76, 164) der Filtermittel (70, 158) abzukühlen und zu kondensieren, wobei das Kühldrahtnetz (76, 164) zwischen den Gaserzeugungsmitteln (68, 156) und dem Glasfasergewebe (64, 162) angeordnet ist.

2. Gasgenerator nach Anspruch 1, dadurch gekennzeichnet, daß die Substanz der ersten Filtermittel (70, 158) eine Vielzahl von Schichten aus Glasfasergewebe (74, 162) umfaßt.

3. Gasgenerator nach Anspruch 2, dadurch gekennzeichnet, daß die ersten Filtermittel (70, 158) eine Vielzahl von Filterteilen einschließen, von denen die Glasfasergewebeschichten (74, 162) einen inneren Teil umfassen.

4. Gasgenerator nach Anspruch 3, dadurch gekennzeichnet, daß der Teil der ersten Filtermittel (70, 158), der an die Gasauslaßöffnungen (24) angrenzt, wenigstens eine Lage (72, 16) eines groben Gitters umfaßt, und daß das Kühldrahtnetz der ersten Filtermittel, das an die Gaserzeugungsmittel angrenzt, eine Vielzahl von Lagen (76, 164) eines feinmaschigen Gitters umfaßt.

5. Gasgenerator nach Anspruch 4, dadurch gekennzeichnet, daß die Zusammensetzung der Gaserzeugungsmittel (68, 156) derart ist, daß eines der Verbrennungsprodukte ein Alkalimetalloxyd ist, das das Glasfasergewebe mit dem Alkalimetalloxyd chemisch reagiert, um ein Alkalimetallsilikat zu erzeugen und um zu veranlassen, daß die Fasern des Glasfasergewebes schwellen und wirksam werden, wenn der Druck in der Verbrennungskammer auf einen vorbestimmten Wert steigt, um die Gasströmung durch die Filtermittel einzuschränken, um dadurch den geschmolzenen Verbrennungsprodukten zu erlauben, sich abzukühlen und an dem feinmaschigen Gitter (76, 164) zu kondensieren.

6. Gasgenerator nach Anspruch 5, dadurch gekennzeichnet, daß eines der Verbrennungsprodukte Atznatron ist und daß das Reaktionsprodukt des Ätznatrons mit dem Glasfasergewebe (74, 162) Natriumsilikat ist.

7. Gasgenerator nach einem der vorangehenden Ansprüche, dadurch gekennzeichnet, daß die Gaserzeugungsmittel (68, 156) und die ersten Filtermittel (70, 158) in einer zerbrechbaren, hermetisch abgedichteten Patrone (30, 126) enthalten sind, daß die Patrone und die Verbrennungskammer (28, 112) zylindrische Form aufweisen und daß die Patrone im wesentlichen konzentrisch zu der Verbrennungskammer angeordnet ist und diese im wesentliche ausfüllt.

8. Gasgenerator nach einem der vorangehenden Ansprüche, dadurch gekennzeichnet, daß er ein Gehäuse (10, 92) mit Wänden einschließt, die einen Ringraum (26, 114) außerhalb der Verbrennungskammer bilden, daß die Wände mit zweiten Gasentladungsöffnungen (86, 176) und zweiten Filtermitteln (78, 166) versehen sind, die in de Ringraum zwischen den genannten ersten Auslaßöffnungen und den zweiten Auslaßöffnungen angeordnet sind, um weiter das Gas zu kühlen und die Verbrennungsprodukte zu fangen.

9. Gasgenerator nach Anspruch 8, dadurch gekennzeichnet, daß die zweiten Filtermittel (78, 166) eine Vielzahl von Filterteilen (80 bis 84, 168 bis 174) einschließen, daß ein Mittelteil (82, 172) der zweiten Filtermittel ein Aluminiumsilikat einschließt, das mit dem Ätznatron chemisch reagiert, um Natriumsilikat zu bilden.

10. Gasgenerator nach Anspruch 9, dadurch gekennzeichnet, daß die zweiten Filtermittel (166) ein Abstandsgitter und ein grobes Gitter (168) zwischen den ersten Gasauslaßöffnungen und einer Abdeckung (172) des Aluminiumsilikates und ein feines Gitter (174) zwischen der Abdeckung aus Aluminiumsilikat und den zweiten Gasauslaßöffnungen (176) einschließen.

11. Gasgenerator nach Anspruch 7 oder 8, 9 oder 10 in Abhängigkeit von Anspruch 7, dadurch gekennzeichnet, daß die brennbaren Gaserzeugungsmittel (68, 156) Zündmittel (60, 150) einschließen, daß die Zündmittel entlang der Zylinderachse der Patrone (30, 126) und der Verbrennungskammer (28, 112) angeordnet sind und daß die Gaserzeugungsmittel eine Vielzahl von Pellets einschließen, die im wesentlichen gleichförmig in der Patrone um die Zündmittel herum verteilt sind.

12. Gasgenerator nach Anspruch 11, dadurch gekennzeichnet, daß die gaserzeugenden Pellets (68, 156) ein verdichtetes Gemisch aus 66% natriumazid, 30% Eisenoxyd, 2% Schwefel und 2% Molybdändisulfid umfassen.

13. Gasgenerator nach Anspruch 11, dadurch gekennzeichnet, daß die gaserzeugenden Pellets (68, 156) ein verdichtetes Gemisch von etwa 65 bis etwa 70 Gew.-% Alkalimetallazid, bis zu etwa 4 Gew.-% Schwefel und von etwa 27 bis etwa 33 Gew.-% Molybdändisulfid, beispielsweise etwa 68 Gew.-% Natriumazid, etwa 2 Gew.-% Schwefel und etwa 30 Gew.-% Molybdänsulfid, umfassen.

14. Gasgenerator nach einem der vorangehenden Ansprüche 1 bis 10, dadurch gekennzeichnet, daß die brennbaren Gaserzeugungsmittel (68, 156) eine Vielzahl von Pellets einschließen, die im wesentlichen gleichmäßig in der Verbrennungskammer verteilt sind und ein verdichtetes Gemisch aus 66% Natriumazid, 30% Eisenoxyd, 2% Schwefel und 2% Molybdändisulfid umfassen.

15. Gasgenerator nach einem der vorangehenden Ansprüche 1 bis 10, dadurch gekennzeichnet, daß die brennbaren Gaserzeugungsmittel eine Vielzahl von Pellets (68, 156) einschließen, die im wesentlichen gleichmäßig in der Verbrennungskammer verteilt sind und ein verdichtetes Gemisch aus etwa 65 bis etwa 70 Gew.-% Alkalimetallazid, bis zu etwa 4 Gew.-% Schwefel und von etwa 27 bis etwa 33 Gew.-% Molybdändisulfid, beispielsweise etwa 68% Gew.-% Natriumazid, etwa 2 Gew.-% Schwegel und etwa 30 Gew.-% Molybdändisulfid, umfassen.

16. Gasgenerator nach einem der vorangehenden Ansprüche, dadurch gekennzeichnet, daß die Gaserzeugungsmittel (68, 156) Zündmittel einschließen, die ein Granulatgemisch (66, 154) aus 15 Gew.-% Bor und 85% Kaliumnitrat plus oder minus 10% für jede Komponente bei weiterer Zugabe von 3 bis 10% Bleiazid umfassen, und daß die Gaserzeugungsmittel die Zündmittel umgeben.

17. Gasgenerator nach Anspruch 16, dadurch gekennzeichnet, daß die Zündmittel eine elektrische Zündladung (60, 150), ein perforiertes Rohr (36, 130) und eine zerreißbare Metallfolie (38, 132), die die Außenwandung des Rohres abdichtet, einschließen und daß die elektrische Zündladung innerhalb des Rohres angrenzend an das Granulatgemisch vorgesehen ist.

18. Verfahren zum Filtern von Stickstoffgas, das durch einen Verbrennungsprozeß erzeugt wird, enthaltend das Verbrennen einer pelletierten Gaserzeugungszusammensetzung (68, 156) in einer Verbrennungskammer (28, 112) mit Gasauslaßöffnungen (24), wobei der Verbrennungsprozeß als andere Verbrennungsprodukte freie Eisenrückstandspartikel und ein Alkalimetalloxid erzeugt, und weiter enthaltend Filtermittel (70, 158), um mit den anderen Verbrennungsprodukten zu reagieren und um diese zu fangen, gekennzeichnet durch Vorsehen eines Glasfasergewebes (74, 162) für die genannten Filtermittel· (70, 158), welches wegen seiner Verträglichkeit mit der Temperatur und der Umgebung der Verbrennungskammer und wegen seiner charakteristischen Eigenschaft, bei dieser Temperatur mit dem Alkalimetalloxid in den Verbrennungsrückständen reagieren zu können, ausgewählt wurde, um ein unschädliches Alkalimetallsilikat zu bilden und um während eines frühen Stadiums der Verbrennungsprozeßdauer klebrig und weniger porös zu werden, um die Strömung der Verbrennungsrückstände durch das Gewebe zu verzögern, durch das Vorsehen einer Vielzahl von Lagen (76, 164) eines feinmaschigen Kühlnetzes zum Kühlen und Kondensieren von Eisenrückstandspartikeln in umgebender Beziehung zu der Gaserzeugungszusammensetzung, die sich damit in Kontakt befindet, und durch berührendes Umgeben des Kühlnetzes mit wenigstens einer Schicht (74, 162) aus dem genannten Gewebe.

19. Verfahren nach Anspruch 18, dadurch gekennzeichnet, daß eine Vielzahl von Lagen aus einem grobmaschigen Netz (72, 160) um das Glasfasergewebe herum dieses berührend und unmittelbar der Innenwandung der Verbrenungskammer benachbart angeordnet wird.

20. Verfahren nach Anspruch 18 oder 19, dadurch gekennzeichnet, daß das Alkalimetalloxyd in den Verbrennungsprodukten Ätznatron ist und daß das Glasfasergewebe mit dem Änznatron reagiert, um unschädliches Natriumsilikat zu bilden.

21. Verfahren nach Anspruch 18, 19 oder 20, dadurch gekennzeichnet, daß die Filtermittel (78, 166) um die Außenwandung der Verbrennungskammer herum und mit dieser in Kontakt angeordnet werden und daß die genannten Filtermittel eine Abdeckung (82, 172) aus Aluminiumsilikat einschließen, um mit dem Ätznatron in den Verbrennungsprodukten zu reagieren, um unschädliches Natriumsilikat zu bilden.

**Revendications**

1. Un générateur de gaz (1, 90) comprenant une chambre de combustion (28, 112) ayant un orifice d'évacuation des gaz (24) et un produit combustible en granulés générateur de gaz (68, 156) disposé dans ladite chambre de combustion et capable, après allumage à l'aide d'un dispositif d'allumage (60, 150) de produire de gaz et des résidus de produit de combustion, et des éléments filtrants primaires (70, 158) pour réagir avec lesdits résidus de produit de combustion et les retenir, caractérisé en ce que ces éléments filtrants primaires (70, 158) sont disposés à l'intérieur de ladite chambre de combustion au voisinage de l'orifice et peuvent fonctionner à la fois pour refroidir les gaz et pour retenir les résidus de produit de combustion dans la chambre de combustion, ces éléments filtrants primaires comprenant un tissue de fibrs de verre (74, 162) et une toile métallique refroidissante (76, 164) proches du produit producteur de gaz, en relation étroite d'environnement avec ce produit, ce tissu de fibres de verre (74, 162) étant choisi pour sa compatibilité avec le procédé de combustion et ayant une surface qui, à la température et dans l'environnement de l'opération de combustion, commence à fondre et devient collante dans un stade précoce de l'opération de combustion, de sorte que la porosité de l'élément filtrant est amoindrie lorsque l'accélération et la vitesse des gaz produits sont à un niveau relativement bas, ceci évitant le refoulement des résidus de produit de combustion hors de la chambre de combustion (28, 112) par l'orifice (24) et permettant à ces résidus de refroidir et de se condenser sur (une) dite toile métallique refroidissante (76, 164) des éléments filtrants (70, 158), ladite toile métallique (76, 164) étant disposée entre le produit générateur de gaz (68, 156) et le tissue de fibres de verre (74, 162).

2. Un générateur de gaz selon la revendication 1, dans lequel la substance des éléments filtrants primaires (70, 158) comprend plusieurs couches dudit tissue de fibres de verre (74, 162).

3. Un générateur de gaz selon la revendication 2, dans lequel l'élément filtrant primaire (70, 158) comprend plusieurs portions filtrantes dont les couches de tissu de fibres de verre (74, 162) constituent une portion intérieure.

4. Un générateur de gaz selon la revendication 3, dans lequel la portion de l'élément filtrant primaire (70, 158) voisine de l'orifice d'évacuation des gaz (24) comprend au moins une couche (72, 16) d'une toile grossière et la toile métallique refroidissante de l'élément filtrant primaire voisin du produit générateur de gaz comprend plusieurs couches (76, 164) de toile métallique fine.

5. Un générateur de gaz selon la revendication 4, dans lequel la composition du produit générateur de gaz (68, 156) est telle qu'un des produits de combustion est un oxyde de métal alcalin, le tissue de fibres de verre réagissant chimiquement avec cet oxyde de métal alcalin en donnant un silicate de métal alcalin et en provoquant un gonflement des fibres du tissue de fibres de verre et leur efficacité, lorsque la pression dans la chambre de combustion monte à un niveau déterminé, à restreindre l'écoulement du gaz au travers de l'élément filtrant, de sorte que les produits de combustion fondus peuvent se refroidir et se condenser sur la toile métallique fein (76, 164).

6. Un générateur de gaz selon la revendication 5, dans lequel l'un des produits de combustion est la soude caustique et le produit de réaction de cette soude caustique avec un tissu de fibres de verre (74, 162) est un silicate de sodium.

7. Un générateur de gaz selon l'une quelconque des revendications qui précédent, dans lequel le produit générateur (68, 156) et l'élément filtrant primaire (70, 158) sont contenus dans une cartouche fermée hermétiquement mais qu'on peut rompre (30, 126), cette cartouche et la chambre de combustion (28, 112) étant toutes deux de forme cylindrique et la cartouche étant en disposition pratiquement concentrique par rapport à la chambre de combustion qu'elle remplit pratiquement complètement.

8. Un générateur de gaz selon l'une quelconque des revendications qui précédent, comprenant un logement (10, 92) ayant des parois définissant un espace annulaire (26, 114) extérieur à la chambre de combustion, ces parois ayant un second orifice d'évacuation des gaz (86, 176) et un élément filtrant secondaire (78, 166) disposé dans ledit espace annulaire entre le premier et le second orifice, afin de refroidire encore les gaz et de retenir les produits de combustion.

9. Un générateur de gaz selon la revendication 8, dans lequel l'élément filtrant secondaire (78, 166) comprend plusieurs portions filtrantes (80—84, 168—174), une portion intermédiaire (82, 172) de ce second élément filtrant comprenant du silicate d'aluminium qui réagit chimiquement avec la soude caustique en donnant du silicate de sodium.

10. Un générateur de gaz selon la revendication 9, dans lequel l'élément filtrant secondaire (166) comprend une toile métallique éloignée et une toile métallique grossière (168) entre le premier orifice d'évacuation des gaz et une couverture (172) du silicate d'aluminium, et une toile métallique fine (174) entre cette couverture de silicate d'aluminium et le second orifice d'évacuation des gaz (176).

11. Un générateur de gaz selon la revendication 7 ou 8, 9 ou 10 en relation avec la revendication 7, dans lequel le dispositif de production de gaz combustibles (68, 156) comprend un dispositif d'allumage (60, 150), ce dispositif d'allumage étant disposé le long de l'axe cylindrique de la cartouche (30, 126) et de la chambre de combustion (28, 112) et dans lequel le dispositif producteur de gaz comprend de multiples granulés répartis pratiquement uniformément dans la cartouche en relation d'environnement avec le dispositif d'allumage.

12. Un générateur de gaz selon la revendication 11, dans lequel les granulés producteurs de gaz (68, 156) consistent en un mélange comprimé de 66% d'azothydrate de sodium, 30% d'oxyde ferreux, 2% de soufre et 2% de disulfure de molybdène.

13. Un générateur de gaz selon la revendication 11, dans lequel les granulés producteurs de gaz (68, 156) consistent en un mélange comprimé d'environ 65% en poids à environ 70% en poids d'un azothydrate de métal alcalin, jusqu'à 4% en poids environ de soufre et d'environ 27% en poids à environ 33% en poids de disulfure de molybdène, par exemple environ 68% en poids d'azothydrate de sodium, environ 2% en poids de soufre et environ 30% en poids de disulfure de molybdène.

14. Un générateur de gaz selon l'une quelconque des revendications précédentes 1 à 10, dans lequel le produit combustible générateur de gaz (68, 156) comprend de multiples granulés répartis pratiquement uniformément dans toute la chambre de combustion et consistant en un mélange comprimé de 66% d'azothydrate de sodium, 30% d'oxyde ferreux, 2% de soufre et 2% de disulfure de molybdène.

15. Un générateur de gaz selon l'une quelconque des revendications précédentes 1 à 10, dans lequel le produit combustible producteur de gaz comprend de multiples granulés (68, 156) répartis pratiquement uniformément dans toute la chambre de combustion et consistant en un mélange comprimé d'environ 65% en poids à environ 70% en poids d'un azothydrate de métal alcalin, jusqu'à environ 4% en poids de soufre et d'environ 27% en poids à environ 33% en poids de disulfure de molybdène, par exemple environ 68% en poids d'azothydrate de sodium, environ 2% en poids de soufre et environ 30% en poids de disulfure de molybdène.

16. Un générateur de gaz selon l'une quelconque des revendications qui précèdent, dans lequel le produit générateur de gaz (68, 156) comprend un produit d'allumage consistant en un mélange granulaire (66, 154) de 15% en poids de bore et 85% de nitrate de potassium plus ou moins 10% pour chaque composant avec addition complémentaire de 3 à 10% d'azothydrate de plomb, le produit générateur de gaz entourant ledit produit d'allumage.

17. Un générateur de gaz selon la revendication 16, dans lequel le dispositif d'alumage comprend un pétard électrique (60, 150), un tube perforé (36, 130) et une feuille métallique qui peut être rompue (38, 132) scellée sur la paroi extérieure dudit tube, le pétard électrique étant disposé à l'intérieur dudit tube, au voisinage du mélange granulaire.

18. Un procédé pour filtrer de l'azote gazeux produit dans une opération de combustion comportant la combustion d'une composition en granulés productrice de gaz (68, 156) dans une chambre de combustion (28, 112) ayant des orifices d'évacuation des gaz (24) et dans lequel l'opération de combustion produit, en tant qu'autres produits de combustion, un résidu de particules de fer libre et un oxyde de métal alcalin, et comportant en outre des éléments filtrants (70, 158) qui réagissent avec ces autres produits de combustion et les retiennent, caractérisé par les stades suivants: on équipe les éléments filtrants (70, 158) d'un tissue de fibres de verre (74, 162) choisi pour sa compatibilité avec la température et l'environnement de la chambre de combustion et pour sa propriété caractéristique de réagir à cette température avec ledit oxyde de métal alcalin contenu dans les résidus de produit de combustion avec formation d'un silicate de métal alcalin sans danger et de devenir collant et moins poreux au cours d'un stade initial de l'opération de combustion en fonction du temps, retardant ainsi l'écoulement au travers de l'élément filtrant des résidus de produit de combustion, on équipe de plusieurs couches (76, 164) d'une toile métallique fine refroidissante permettant de refroidire et de condenser les résidus de particules de fer en relation d'environnement avec la composition génératrice de gaz, en contact avec celle-ci, et environnant ladite toile refroidissante, en contact avec celle-ci, par au moins une couche (74, 162) du tissu en question.

19. Un procédé selon la revendication 18, dans lequel on dispose plusieurs couches de toile métallique grossière (72, 160) en relation d'environnement avec le tissue de fibres de verre, en contact avec ce tissue et au voisinage immédiat de la paroi intérieure de la chambre de combustion.

20. Un procédé selon la revendication 18 ou 19 dans lequel l'oxyde de métal alcalin contenu dans les produits de combustion consiste en soude caustique et dans lequel le tissu de fibres de verre réagit avec la soude caustique en donnant un silicate de sodium sans danger.

21. Un procédé selon la revendication 18, 19 ou 20, dans lequel on dispose un élément filtrant (78, 166) en relation d'environnement avec la paroi extérieure de la chambre de combustion, en contact avec celle-ci, cet élément filtrant incluant une couverture (82, 172) de silicate d'aluminium qui réagit avec la soude caustique des produits de combustion en donnant du silicate de sodium sans danger.

FIG. I

FIG. 2

0 012 626